# EUROPEAN PATENT SPECIFICATION

(11) **EP 3 789 252 B1**
(45) Date of publication and mention of the grant of the patent: **06.10.2021**
(21) Application number: 19195058.3
(22) Date of filing: 03.09.2019
(51) Int. Cl.: B60S 1/34

(54) **PANTOGRAPHIC WIPER**
PANTOGRAFISCHER WISCHER
ESSUIE-GLACE PANTOGRAPHIQUE

(43) Date of publication of application: 10.03.2021
(73) Proprietor: Arrival Limited, London W14 8TS (GB)
(72) Inventor: BULLOCK, Joff, London, W14 8TS (GB)
(74) Representative: Korenberg, Alexander Tal

(56) References cited:
- EP-A2- 0 477 803
- US-A- 2 871 501
- US-A- 3 418 678
- US-A- 4 318 201
- US-A- 4 716 612

## Description

The present disclosure relates to a pantographic wiper arm assembly for cleaning the windscreen of a vehicle.

Existing pantographic windscreen wipers are costly, heavy and aesthetically unappealing since dual arms are needed to sweep a windscreen in a pantographic motion. This increases the number of parts, total cost and total weight, while detracting from the aesthetic of the vehicle. The second arm also obscures the driver's view.

US 4 318 201 A discloses an aircraft windshield wiper arm assembly adapted particularly for use with curved windshields, the wiper arm assembly having a hub mountable on an oscillatory wiper drive post and an elongate wiper arm cantilevered from the hub with a wiper blade carried on the free end of the arm.

US 4 716 612 A discloses a primary wiper arm including a mounting head for securing the inner end to a pivot shaft, the outer end being pivotally secured to a pivot block.

US 2 871 501 A discloses a wiper construction designed for curved windshields.

US 3 418 678 A discloses a windshield wiper arm and blade combination for motor vehicles in which a primary wiper arm is pivoted to a pivot block at its free end and includes a mounting section for securement to a pivot shaft at its other. This document discloses the preamble of independent claim 1.

Aspects are set out in the independent claims and optional features are set out in the claims dependent thereto.

The pantographic wiper arm assembly disclosed represents a shift in pantographic wiper arm design resulting from an innovative ground-up design approach. As a result, the wiper arm comprises fewer parts than conventional pantographic wiper arms, allowing for both cost and weight savings. Further, one of the arms may fully or partially hide the other, for example only a single arm of the pantographic wiper may be visible in normal use. This can significantly improve the aesthetics of the wiper, all while retaining a pantographic sweep of the wiper blade.

A main wiper arm has a spindle bracket for attaching the main arm to a spindle of a drive unit for reciprocating the wiper arm about a main axis. A wiper attachment is spaced along the wiper arm from the spindle bracket, wherein the wiper attachment is secured to the wiper arm to rotate about a wiper axis. The pantographic wiper comprises an auxiliary arm rotatably connected at one end to the wiper attachment to rotate relative to the wiper attachment about a first auxiliary axis off-set from the wiper axis. It further comprises an auxiliary bracket (also referred to as a parallel link) for coupling the auxiliary arm at its other end to the drive unit to rotate relative to the parallel link about a second auxiliary axis having a fixed offset from the main axis, thereby rotating the wiper attachment about the wiper axis in a pantographic motion as the wiper arm rotates about the main axis. It will be understood that the auxiliary bracket serves the function of implementing pantographic motion of the wiper system and will be understood in this way, without implying a strict geometrical limitation. The drive unit comprises a sleeve arranged around the spindle, and the auxiliary bracket is secured to the sleeve. The main arm has a width and/or is shaped to hide the auxiliary bracket and/ or auxiliary arm behind it over the range of motion of the main arm.

The auxiliary arm is disposed along the wiper arm in an at least partially overlapping relationship. The wiper arm may be wider than the auxiliary arm or the auxiliary arm is wider than the wiper arm and may fully overlap the auxiliary arm along the majority of its length. The majority of its length may be 70%, preferably 80% and more preferably 90% of its length.

In some embodiments, the ends of the auxiliary arm have an end section extending laterally away from a main section of the auxiliary arm, for example in a curved manner, thereby defining a line of force transmission from one end to the other that is laterally off-set from the auxiliary arm. This facilitates the hiding of the auxiliary arm behind the main arm with a greater off set from the line of action of the main arm than would otherwise be possible, thereby enabling the aesthetic improvements described with larger lever arms (smaller lever moments) about the axes than would otherwise be possible.

Furthermore, in conventional wiper systems, a spring is needed to apply constant pressure during the wiper sweep, which fatigues over time and adds cost and weight. Spring arms, where a wiper arm is made of a resiliently flexible material that biases the arm against the windscreen without the need for an additional spring, are known. See for example EP 2934957 B1. Prior to the present disclosure a way to apply this concept to a pantographic wiper was not known.

The main wiper arm may be a resilient arm (a spring arm) made from resiliently flexible material configured to provide a spring force for biasing the wiper attachment towards a windscreen, and all of the force biasing the wiper attachment towards the windscreen may be provided by the spring force provided by the arm.

What is more, with the disclosed pantographic wiper, only one of the arms needs to be made of a resiliently flexible material to provide a spring force for biasing the wiper towards a windscreen, while reducing or avoiding the need for a separate spring element and corresponding hinge. This advantageously further improves the aesthetics and reduces the number of required parts, which in turn leads to further cost and weight reductions.

Embodiments of the invention will now be described by way of example with reference to the drawings of which:
Figure 1 is an exploded view of a pantographic wiper arm assembly;
Figure 2 illustrates a wiper blade;
Figures 3A, 3B and 3C illustrate a pantographic wiper arm assembly attached to a drive unit and a wiper blade; and
Figure 4 is an exploded view of a drive unit.

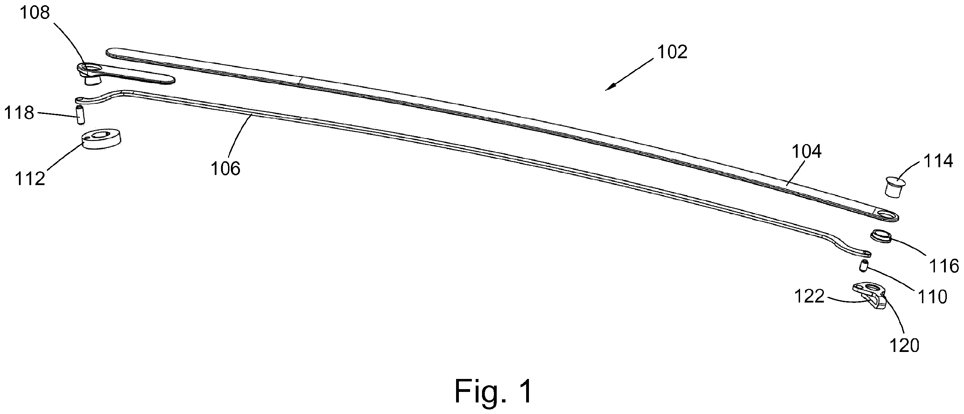

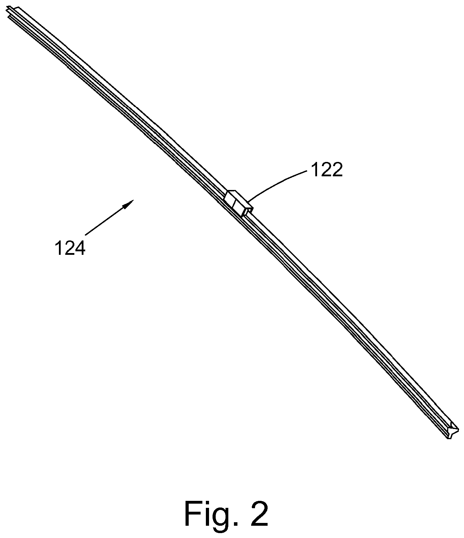

With reference to Figures 1 and 2 a pantographic wiper arm assembly 102 comprises a wiper arm 104, an auxiliary arm 106, a spindle bracket 108, a first rivet with bushing 110, a parallel link 112, a rivet 114, a bushing 116, a second rivet with bushing 118 and a wiper attachment 120 comprising a free end 122 for attaching a wiper blade 124. The wiper attachment 120 can be integral with the wiper arm 104. For the avoidance of doubt, although reference is made to a parallel link 112, no strict compliance with a parallelogram configuration is required and in some embodiments, there may be noticeable tolerances.

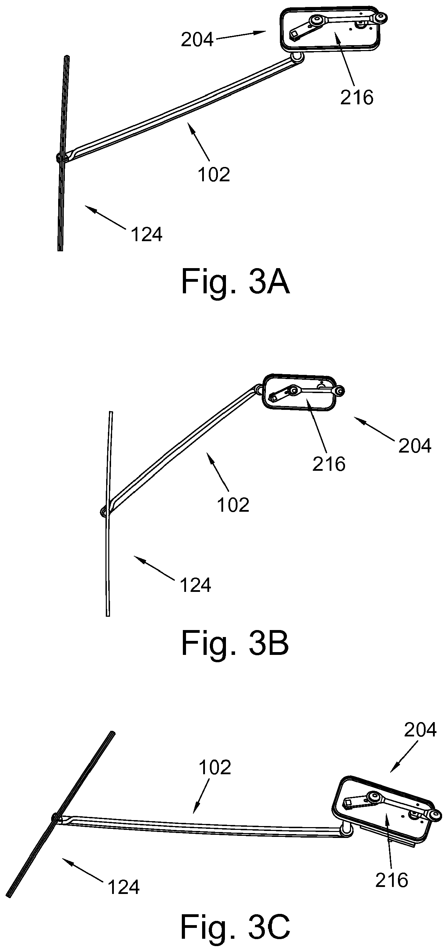

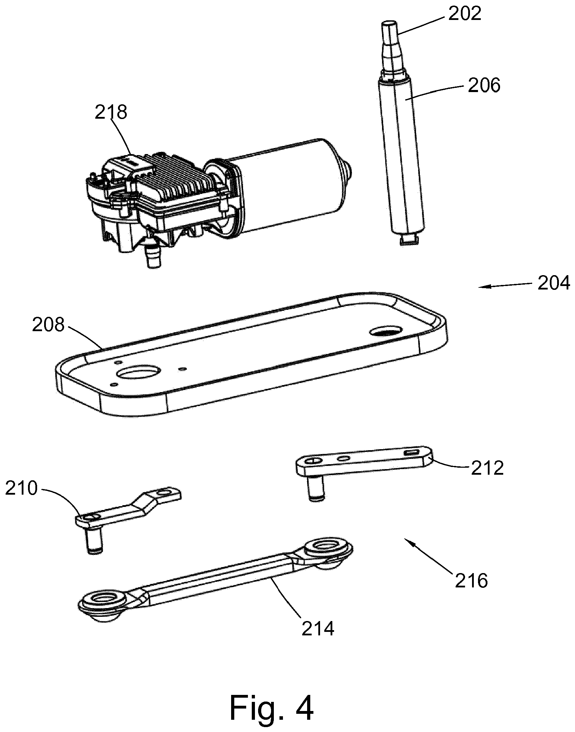

The wiper arm 104 connects to the spindle bracket 108 which attaches the wiper arm 104 to a spindle 202 of a drive unit 204 (discussed below with reference to Figures 3 and 4) for reciprocating the wiper arm 104 about the axis of rotation of the spindle 202, referred to below as the main axis. Specifically, as illustrated in Figure 4, in some embodiments, the spindle bracket 108 can be attached to the spindle 202 by sliding the spindle bracket 108 onto a sleeve 206 around the spindle 202 until the spindle bracket 108 engages an internal detent inside the sleeve 206. The wiper attachment 120 is spaced along the wiper arm 104 from the spindle bracket 108 for attaching the wiper blade 124 to the wiper arm 104 via the free end 122. The wiper attachment 120 is secured to the wiper arm 104 via the rivet 114 and bushing 116 to rotate about a wiper axis through the rivet 114. The auxiliary arm 106 is rotatably connected at one end to the wiper attachment 120 via the first rivet with bushing 110 to rotate relative to the wiper attachment 120 about a first auxiliary axis off-set from the wiper axis.

The parallel link 112 couples the auxiliary arm 106 at its other end to the drive unit 204 and is disposed in a fixed relationship to the drive unit 204. For example, the parallel link 112 may attach to the spindle bracket 108 for attachment to the sleeve 206 around the spindle 202. The auxiliary arm 106 is connected to the parallel link 112 via the second rivet with bushing 118 to rotate relative to the parallel link 112 about a second auxiliary axis through the second rivet with bushing 118 and hence having a fixed offset from the main axis. As a result, the auxiliary arm 106 causes the wiper attachment 120 to rotate about the wiper axis in a pantographic motion as the wiper arm 104 rotates about the main axis.

The auxiliary arm 106 is disposed along the wiper arm 104 in an at least partially overlapping relationship, in order to at least partially hide the auxiliary arm 106 behind the wiper arm 104. The wiper arm 104 may be wider than the auxiliary arm 106 to facilitate this. Alternatively, the auxiliary arm 106 may be wider than the wiper arm 104, such that the auxiliary arm 106 may be at least partially hidden behind the wiper arm 104. The wiper arm 104 may fully overlap the auxiliary arm 106 along the majority of its length, the majority of its length being 70%, preferably 80% and more preferably 90% of its length. The wiper arm 104 may have a width and/or be shaped to hide the parallel link 112 and/or auxiliary arm 106 behind it over the range of motion of the wiper arm 104.

The auxiliary arm 106 may be attached to the parallel link 112 such that the second slave axis can tilt relative to the main axis as the wiper arm 104 reciprocates. For example, the auxiliary arm 106 can be attached to the parallel link 112 via a ball and socket attachment. Alternatively or additionally, the auxiliary arm 106 can bend or flex as the wiper arm 104 bends or flexes towards a windscreen as it reciprocates. In some embodiments, a ball and socket attachment may be replaced by any other suitable attachment, for example a rivet with or without a bushing as described above. In some embodiments, the attachment of the auxiliary arm 106 to the parallel link 112 (or the wiper attachment 120) may have some play to accommodate any relative motion of the auxiliary arm 106 and the wiper arm 104.

As can be seen from Figure 1, in some embodiments, the ends of the auxiliary arm 106 are dogleg shaped or curved. This allows the main length of the auxiliary arm 106 to be positioned behind the wiper arm 104, while allowing the auxiliary arm 106 to connect to the parallel link 112 and wiper attachment 120 at a desired lateral offset. Further, the curved or dogleg shape allows the auxiliary arm 106 to connect at the sides of parallel link 112 and wiper attachment 120 while maintaining overlap with the wiper arm, meaning the distance between adjacent axes of rotations can be increased while still hiding the majority of the auxiliary arm 106 behind the wiper arm 104. In other words, when the ends of the auxiliary arm have an end section extending laterally away from a main section of the auxiliary arm, for example in a curved manner, they defining a line of force transmission from one end to the other that is laterally off-set from the auxiliary arm. This facilitates the hiding of the auxiliary arm behind the main arm with a greater off set from the line of action of the main arm than would otherwise be possible, and thus improves the wiper arm aesthetics with larger lever arms about the axes than would otherwise be possible. This thus enables the lever moments of the pantographic arrangement to be reduced while maintaining the aesthetics of the arrangement.

In some embodiments, the wiper arm 104 is made of a resiliently flexible material and acts as a spring arm (also known as a resilient arm) to bias the wiper against a windscreen. When assembled as part of a wiper system comprising a windscreen, the spring arm is thus configured to provide a spring force for biasing the wiper arm 104 (and therefore a wiper attachment 120 and wiper blade 124) towards the windscreen. Suitable resiliently flexible materials include steel (such as stainless steel or spring steel), fibre reinforced plastics, thermoplastics and carbon fibre. Advantageously, by using the inherent resilience of the wiper arm to bias the wiper blade 124 against a windscreen, additional moving parts, such as a hinge and spring arrangement, can be avoided or at least their specification can be reduced.

It will be understood that the wiper arm 104 does not need to be made from a resilient flexible material (i.e. does not need to be a spring arm), and a conventional spring configured in a conventional manner could be used to bias the wiper arm 104 towards a windscreen instead. That is to say that the wiper arm 104 may further comprise a spring and a hinge to provide a spring force biasing the main arm and/or the auxiliary arm towards a windscreen when the wiper arm assembly 102 is installed.

Figure 2 illustrates a wiper blade 124 for attachment to the wiper attachment 120 of the wiper arm 104. Specifically, the wiper blade 124 can be attached by sliding the wiper blade sleeve 122 of the wiper blade 124 onto the free end 122 of the wiper attachment 120 until the free end 122 engages an internal detent inside the wiper blade sleeve 122. Figures 3A, 3B and 3C illustrate the wiper arm assembly 102 attached to the drive unit 204 and wiper blade 124 and Figure 4 is an exploded view of the drive unit 204. The drive unit comprises a base plate 208, first lever 210, second lever 212 and linkage 214. The base plate 208 comprises offset through holes for receiving the levers 210/212. The base plate 208, levers 210/212 and linkage 214 are arranged as a crank 216, configured to convert rotational motion of a motor 218 into reciprocal motion of the spindle 202. Other ways of providing a drive unit 204 that provides reciprocal motion are well known to the skilled person and are used to replace the illustrated arrangement in various embodiments. The drive unit 204 may comprise a sleeve 206 arranged around the spindle 202 and fixedly connected or formed with a casting of the drive unit 204. The parallel link 112 may be secured to the sleeve 206, as described above, in some embodiments. It will be understood that other ways of fixedly disposing the parallel link 112 relative to the drive unit 204 may be employed in accordance with various embodiments.

It will be appreciated that the above description is made by way of example. Various modifications are possible and will be readily apparent to the skilled person in the art. Likewise, features of the described embodiments can be combined with any appropriate aspect described above and optional features of any one aspect can be combined with any other appropriate aspect. While the described wiper system, design method and pantographic wiper are particularly advantageous in the context of vehicles, it will be understood that described embodiments are not limited to this application but rather are applicable to any vehicles that require windscreen (or any other) wipers, be that other road vehicles, for example being driven by internal combustion engines, naval vehicles such as boats, ships and other vessels and airborne vehicles such as planes, helicopters and the like. The disclosure is further equally applicable to wipers for stationary structures, such as naval or airport control towers.

## Claims

1. A pantographic wiper arm assembly (102) comprising:
a main arm (104) and a drive unit (204), where the main arm (104) has a spindle bracket (108) for attaching the main arm (104) to a spindle (202) of the drive unit (204) for reciprocating the main arm (104) about a main axis;
a wiper attachment (120) spaced along the main arm (104) from the spindle bracket (108) for attaching a wiper blade (124) to the main arm (104), wherein the wiper attachment (120) is secured to the main arm (104) to rotate about a wiper axis;
an auxiliary arm (106) rotatably connected at one end to the wiper attachment (120) to rotate relative to the wiper attachment (120) about a first auxiliary axis off-set from the wiper axis;
an auxiliary bracket (112) for coupling the auxiliary arm (106) at its other end to the drive unit (204) to rotate relative to the auxiliary bracket (112) about a second auxiliary axis having a fixed offset from the main axis, thereby rotating the wiper attachment (120) about the wiper axis in a pantographic motion as the main arm (104) rotates about the main axis,
wherein the auxiliary arm (106) is disposed along the main arm (104) in an at least partially overlapping relationship,
**characterized in that**
the drive unit (204) comprises a sleeve (206) arranged around the spindle (202), and the auxiliary bracket (112) is secured to the sleeve (206),
wherein the main arm (104) has a width and/or is shaped to hide the auxiliary bracket (112) and/or auxiliary arm (106) behind it over the range of motion of the main arm (104).

2. The pantographic wiper arm assembly (102) of claim 1, wherein the main arm (104) is wider than the auxiliary arm (106) or the auxiliary arm (106) is wider than the main arm (104).

3. The pantographic wiper arm assembly (102) of any preceding claim, wherein the main arm (104) fully overlaps the auxiliary arm (106) along the majority of its length.

4. The pantographic wiper arm assembly (102) of claim 3, wherein the majority of its length is 70%, preferably 80% and more preferably 90% of its length.

5. The pantographic wiper arm assembly (102) of any preceding claim, wherein the main arm (104) is made from resiliently flexible material to provide a spring force biasing the wiper attachment (120) towards a windscreen when the wiper arm assembly (102) is installed.

6. The pantographic wiper arm assembly (102) of claim 5, wherein the wiper arm assembly (102) does not have any additional resilient member to provide the spring force.

7. The pantographic wiper arm assembly (102) of any preceding claim, wherein the ends of the auxiliary arm (106) have an end section extending laterally away from a main section of the auxiliary arm (106), thereby defining a line of force transmission from one end to the other that is laterally off-set from the auxiliary arm (106).

8. The pantographic wiper arm assembly (102) of any preceding claim, wherein one or both ends of the auxiliary arm (106) are curved.

9. The pantographic wiper arm assembly (102) of any preceding claim, further comprising a spring and a hinge to provide a spring force biasing the main arm (104) and/or the auxiliary arm (106) towards a windscreen when the wiper arm assembly (102) is installed.

10. A vehicle comprising the pantographic wiper arm assembly (102) of any preceding claim.

## Patentansprüche

1. Pantografische Wischerarmanordnung (102), Folgendes umfassend:
einen Hauptarm (104) und eine Antriebseinheit (204), wobei der Hauptarm (104) eine Spindelhalterung (108) aufweist, um den Hauptarm (104) an einer Spindel (202) der Antriebseinheit (204) zu befestigen, um den Hauptarm (104) um eine Hauptachse hin und her zu bewegen;
einen Wischeranschluss (120), der entlang des Hauptarms (104) von der Spindelhalterung (108) beabstandet ist, um ein Wischerblatt (124) am Hauptarm (104) zu befestigen, wobei der Wischeranschluss (120) am Hauptarm (104) fixiert ist, um sich um eine Wischerachse zu drehen;
einen Hilfsarm (106), der an einem Ende drehbar mit dem Wischeranschluss (120) verbunden ist, um sich in Bezug zum Wischeranschluss (120) um eine erste Hilfsachse, die von der Wischerachse versetzt ist, zu drehen;
eine Hilfshalterung (112), um den Hilfsarm (106) an seinem anderen Ende mit der Antriebseinheit (204) zu koppeln, um sich in Bezug zur Hilfshalterung (112) um eine zweite Hilfsachse zu drehen, die einen festen Versatz von der Hauptachse aufweist, dadurch Drehen des Wischeranschlusses (120) um die Wischerachse in einer pantografischen Bewegung, während sich der Hauptarm (104) um die Hauptachse dreht,
wobei der Hilfsarm (106) entlang des Hauptarms (104) zumindest teilweise überlagernd angeordnet ist,
**dadurch gekennzeichnet, dass**
die Antriebseinheit (204) eine Manschette (206) umfasst, die um die Spindel (202) angeordnet ist, und die Hilfshalterung (112) an der Manschette (206) fixiert ist, wobei der Hauptarm (104) eine Breite aufweist und/oder geformt ist, um die Hilfshalterung (112) und/oder den Hilfsarm (106) über den Bewegungsbereich des Hauptarms (104) dahinter zu verbergen.

2. Pantografische Wischerarmanordnung (102) nach Anspruch 1, wobei der Hauptarm (104) breiter als der Hilfsarm (106) ist oder der Hilfsarm (106) breiter als der Hauptarm (104) ist.

3. Pantografische Wischerarmanordnung (102) nach einem der vorstehenden Ansprüche, wobei der Hauptarm (104) den Hilfsarm (106) entlang des Großteils seiner Länge vollständig überlagert.

4. Pantografische Wischerarmanordnung (102) nach Anspruch 3, wobei der Großteil seiner Länge 70 %, vorzugsweise 80 % und weiter bevorzugt 90 % seiner Länge ist.

5. Pantografische Wischerarmanordnung (102) nach einem der vorstehenden Ansprüche, wobei der Hauptarm (104) aus einem elastisch flexiblen Material besteht, um eine Federkraft vorzusehen, die den Wischeranschluss (120) zu einer Windschutzscheibe hin vorspannt, wenn die Wischerarmanordnung (102) eingebaut ist.

6. Pantografische Wischerarmanordnung (102) nach Anspruch 5, wobei die Wischerarmanordnung (102) kein zusätzliches elastisches Element aufweist, um die Federkraft vorzusehen.

7. Pantografische Wischerarmanordnung (102) nach einem der vorstehenden Ansprüche, wobei die Enden des Hilfsarms (106) einen Endabschnitt aufweisen, der sich seitlich von einem Hauptabschnitt des Hilfsarms (106) weg erstreckt, wodurch eine Kraftübertragungslinie von einem Ende zum anderen definiert wird, die vom Hilfsarm (106) seitlich versetzt ist.

8. Pantografische Wischerarmanordnung (102) nach einem der vorstehenden Ansprüche, wobei ein oder beide Enden des Hilfsarms (106) gekrümmt sind.

9. Pantografische Wischerarmanordnung (102) nach einem der vorstehenden Ansprüche, ferner eine Feder und ein Scharnier umfassend, um eine Federkraft vorzusehen, die den Hauptarm (104) und/oder den Hilfsarm (106) zu einer Windschutzscheibe hin vorspannt, wenn die Wischerarmanordnung (102) eingebaut ist.

10. Fahrzeug, das die pantografische Wischerarmanordnung (102) nach einem der vorstehenden Ansprüche umfasst.

## Revendications

1. Ensemble bras d'essuie-glace pantographique (102) comprenant :
un bras principal (104) et une unité d'entraînement (204), le bras principal (104) ayant un support de broche (108) pour fixer le bras principal (104) à une broche (202) de l'unité d'entraînement (204) pour animer d'un mouvement alternatif le bras principal (104) autour d'un axe principal ;
une fixation d'essuie-glace (120) espacée le long du bras principal (104) à partir du support de broche (108) pour fixer une lame d'essuie-glace (124) au bras principal (104), la fixation d'essuie-glace (120) étant fixée au bras principal (104) pour tourner autour d'un axe d'essuie-glace ;
un bras auxiliaire (106) relié de manière rotative au niveau d'une extrémité à la fixation d'essuie-glace (120) pour tourner par rapport à la fixation d'essuie-glace (120) autour d'un premier axe auxiliaire décalé de l'axe d'essuie-glace ;
un support auxiliaire (112) pour accoupler le bras auxiliaire (106) au niveau de son autre extrémité à l'unité d'entraînement (204) pour tourner par rapport au support auxiliaire (112) autour d'un second axe auxiliaire ayant un décalage fixe par rapport à l'axe principal, faisant ainsi tourner l'accessoire d'essuie-glace (120) autour de l'axe d'essuie-glace dans un mouvement pantographique lorsque le bras principal (104) tourne autour de l'axe principal,
le bras auxiliaire (106) étant disposé le long du bras principal (104) dans une relation de chevauchement au moins partiel, **caractérisé en ce que**
l'unité d'entraînement (204) comprend un manchon (206) disposé autour de la broche (202), et le support auxiliaire (112) est fixé au manchon (206),
le bras principal (104) ayant une largeur et/ou une forme permettant de cacher le support auxiliaire (112) et/ou le bras auxiliaire (106) derrière lui sur la plage de mouvement du bras principal (104).

2. Ensemble bras d'essuie-glace pantographique (102) selon la revendication 1, le bras principal (104) étant plus large que le bras auxiliaire (106) ou le bras auxiliaire (106) étant plus large que le bras principal (104) .

3. Ensemble bras d'essuie-glace pantographique (102) selon l'une quelconque des revendications précédentes, le bras principal (104) chevauchant entièrement le bras auxiliaire (106) sur la majorité de sa longueur.

4. Ensemble bras d'essuie-glace pantographique (102) selon la revendication 3, la majorité de sa longueur représentant 70 %, de préférence 80 % et plus préférablement 90 % de sa longueur.

5. Ensemble bras d'essuie-glace pantographique (102) selon l'une quelconque des revendications précédentes, le bras principal (104) étant en un matériau élastiquement flexible pour fournir une force de ressort sollicitant la fixation d'essuie-glace (120) vers un pare-brise lorsque l'ensemble bras d'essuie-glace (102) est installé.

6. Ensemble bras d'essuie-glace pantographique (102) selon la revendication 5, l'ensemble bras d'essuie-glace (102) n'ayant pas d'élément élastique supplémentaire pour fournir la force de ressort.

7. Ensemble bras d'essuie-glace pantographique (102) selon l'une quelconque des revendications précédentes, les extrémités du bras auxiliaire (106) ayant une section d'extrémité s'étendant latéralement à l'opposé d'une section principale du bras auxiliaire (106), définissant ainsi une ligne de transmission de force d'une extrémité à l'autre qui est décalée latéralement par rapport au bras auxiliaire (106).

8. Ensemble bras d'essuie-glace pantographique (102) selon l'une quelconque des revendications précédentes, une ou les deux extrémités du bras auxiliaire (106) étant incurvées.

9. Ensemble bras d'essuie-glace pantographique (102) selon l'une quelconque des revendications précédentes, comprenant en outre un ressort et une charnière pour fournir une force de ressort sollicitant le bras principal (104) et/ou le bras auxiliaire (106) vers un pare-brise lorsque l'ensemble bras d'essuie-glace (102) est installé.

10. Véhicule comprenant l'ensemble bras d'essuie-glace pantographique (102) selon l'une quelconque des revendications précédentes.
